# EUROPÄISCHE PATENTANMELDUNG

(11) **EP 0 645 302 A1**
(43) Veröffentlichungstag der Anmeldung: **29.03.1995**
(21) Anmeldenummer: 94114601.1
(22) Anmeldetag: 16.09.1994
(51) Int. Cl.: B63B 1/38, B63H 11/02

(54) **Verfahren und Vorrichtung zur wirkungsvolleren Umsetzung der Antriebsenergien von Wasserfahrzeugen in Geschwindigkeit**

(30) Priorität: 23.09.1993 DE 4332358
(71) Anmelder: Nissen, Jens Peter, D-25358 Horst (DE)
(72) Erfinder: Nissen, Jens Peter, D-25358 Horst (DE)

(57) **Zusammenfassung**

Die Steigerung der Geschwindigkeit von Wasserfahrzeugen erfordert überproportionale Antriebsleistungen da die Reibkraft des Wassers mit der Geschwindigkeit exponentiell ansteigt. Bekannte Verfahren versuchen durch Verringerung der benetzten Fläche (Tragflügelboot) oder Nutzung der geringeren Reibkraft der Luft (Luftkissenboot) diesen Sachverhalt zu umgehen, was jedoch nur teilweise mit aufwendigen Sonderkonstruktionen gelingt, die zudem gegen Seegang empfindlich sind. Das erfindungsgemäße Verfahren und eine Vorrichtung zu dessen Ausführung sollen den überproportionalen Anstieg der Wasserreibung verhindern unter weitestgehender Beibehaltung der für Gleiter typischen Rumpfform

Die kinetische Energie des abgehenden Schubstrahles eines Wasserstrahlantriebes, auch als Jet-Antrieb bezeichnet, wird dazu verwendet die vom anströmenden Wasser 2 auf den Gleitboden 1 ausgeübte Reibungskraft, durch Injizieren von Luft nach dem Venturi-Prinzip, wesentlich zu verringern. Mindestens eine in oder an einem Gleitboden 1 angeordnete Vorrichtung 3 zur Durchführung des Verfahrens ist mit einer Düse 9 versehen, aus der Strahlwasserr 15 austritt, welches der Düsenmündung 11 durch Öffnungen 6 im Gleitboden 1 zugeführte Luft ansaugt und ein reibungsminderndes Luft-Wasser-Gemisch 16 zwischen anströmendem Wasser 2 und Gleitboden 1 drückt. Das Strahlwasser 15 kann gleichzeitig die Schubkraft für die Fortbewegung des Wasserfahrzeuges liefern.

## Beschreibung

Die Erfindung betrifft ein verfahren und eine zu dessen Ausfürung dienende Vorrichtung zur wirkungsvolleren Umsetzung der Antriebsenergien von schnellfahrenden Wasserfahrzeugen in Geschwindigkeit, vorzugsweise unter Beibehaltung der für Gleiter typischen Rumpfform.

In den letzten Jahren werden zunehmend Anstrengungen unternommen, die Geschwindigkeit von Schiffen, z.B. Fährschiffen, zu steigern. Hierzu gehört die Ausbildung von Tragflügeln, oder die Erzeugung eines Luftkissens, mittels dessen das Fahrzeug teilweise oder ganz aus dem Wasser gehoben wird. (Tragflügelboot, Luftkissenboot, Mehrrumpfboot.)

Allen verfahren gemeinsam liegt das Prinzip zugrunde, die vom Wasser benetzte Gleitfläche, und somit auch die Reibkraft, wesentlich zu verringern, (Tragflügelboot) oder gar fast ganz zu vermeiden, (Luftkissenboot) und stattdessen die Tragkraft der Luft zu nutzen. Der Grund dieser Bestrebungen ist in der Erkenntnis zu sehen, daß die Reibungskraft des Wassers ein Vielfaches der Reibungskraft der Luft beträgt. Da die Luft jedoch nicht ohne Energie zwischen Gleitboden und Wasser tritt, sind Gleitboote und Luftkissenfahrzeuge mit entsprechenden Gebläsen zur Traglufterzeugung ausgestattet, die wiederum nicht unwesentliche Antriebsenergien benötigen.

Diese bekannten Verfahren haben den Nachteil, daß sie technisch aufwendige Lösungen verlangen, gegen Seegang empfindlich sind, überproportionale Antriebsleistungen erfordern und auf Wasserfahrzeuge ohne Motor nicht anwendbar sind.

Der Erfindung liegt die Aufgabe zugrunde, ein Verfahren und eine Vorrichtung zu entwickeln welche diese Nachteile vermeiden.

Herkömmliche, motorgetriebene Wasserfahrzeuge, erhalten die Schubkraft zur Aufrechterhaltung ihrer Geschwindigkeit durch den Impuls eines nach hinten beschleunigten Wasserstrahls. Das Verfahren nach der Erfindung beruht darauf, daß die im abgehenden Schubstrahl enthaltene kinetische Energie nicht nutzlos hinter dem Wasserfahrzeug in Form von Wasserwirbeln, Wellenschlag und Lärm verpufft, sondern dazu verwendet wird, die zwischen Rumpf und anströmendem Wasser auftretenden Reibungskräfte wesentlich zu verringern, in dem Luft zwischen einen Gleitboden des Wasserfahrzeuges und einen Teil des anströmenden Wassers injiziert wird, so daß sich eine Gleitschicht aus einem Luft-Wasser-Gemisch dazwischen bildet. Zu diesem Zwecke wird bei motorgetriebenen Wasserfahrzeugen vorzugsweise die Schubdüse eines an sich bekannten Wasserstrahlantriebes, auch als Jet-Antrieb bezeichnet, aus dem Heckbereich erfindungsgemäß in die am oder im Gleitboden installierten Injektionsvorrichtungen verlegt. Die Anzahl und Anordnung dieser Vorrichtungen ist so gewählt, daß eine gleichmäßige Verteilung des Luft-Wasser-Gemisches über den Gleitboden erreicht wird. Die Luft-Injektion erfolgt nach dem Venturi-Prinzip, wie es auch bei der Wasserstrahlpumpe angewendet wird, wobei die Ausführung für das erfindungsgemäße Verfahren vorzugsweise modifiziert ist. Die Wasserzufuhr zur Druckwasser erzeugenden Pumpe oder Turbine, erfolgt dort zweckmäßig durch Führungsleisten, die aus der Gleitfläche in das anstromende Wasser ragen und nach unten hin Öffnungen besitzen. Diese Führungsleisten können gleichzeitig zur seitlichen Gleitflächenbegrenzung dienen und die Funktion eines Kieles bzw. Schwertes übernehmen.

Man hat bei Anwendung des erfindungsgemäßen Verfahrens den Vorteil, für die Reduzierung der Gleitreibung keine zusätzliche Energie aufwenden zu müssen. Die im abgehenden Schubstrahl in Form von kinetischer Energie enthaltene Antriebsleistung wird somit, gegenüber bekannten Antrieben, wirkungsvoller in Geschwindigkeit umgesetzt, ohne daß die für Gleiter übliche Rumpfform wesentlich verändert werden muß.

Wasserfahrzeuge, die ihre Schubkraft mittels Segel dem Wind abgewinnen, besitzen keinen energiereichen abgehenden Schubstrahl. Für die Anwendung des erfindungsgemäßen Verfahrens, wird das energiereiche Strahlwasser indirekt durch Ausnutzung der Gleitgeschwindigkeit des Wasserfahrzeuges und des daraus resultierenden dynamischen Druckes des anströmenden Wassers erzeugt. Hierfür wird die erfindungsgemäße Vorrichtung mit einem Wasserzulauf versehen, an dessen Ende sich die Düse befindet, die die bereits geschilderte Luftinjektion bewirkt. Für dieses Vefahren ist es unerheblich, ob die Schubkraft des Wasserfahrzeuges mit Segel, oder mit Motorkraft erzeugt wird.

In den Zeichnungen wird die Erfindung an Hand von Ausführungsbeispielen näher erläutert. Es zeigen:
- Fig. 1: eine Draufsicht auf eine Vorrichtung,
- Fig. 2: einen Schnitt entlang der Linie II - II in Fig. 1,
- Fig. 3: eine Ansicht von hinten auf die Vorrichtung,
- Fig. 4: eine perspektivische Ansicht der Vorrichtung,
- Fig. 5: eine Seitenansicht eines mit einer Vorrichtung nach Anspruch 1 ausgestatteten Wasserfahrzeuges,
- Fig. 6: eine Ansicht des Gleitbodens aus Fig. 5 von unten,
- Fig. 7: eine Draufsicht auf eine modifizierte Vorrichtung,
- Fig. 8: einen Schnitt entlang der Linie VIII - VIII der modifizierten Vorrichtung in Fig. 7
- Fig. 9: eine Düse mit Leitschaufeln in drei Ansichten,
- Fig.10: eine Führungsleiste unterhalb des Gleitbodens mit Wassereintrittsöffnungen.

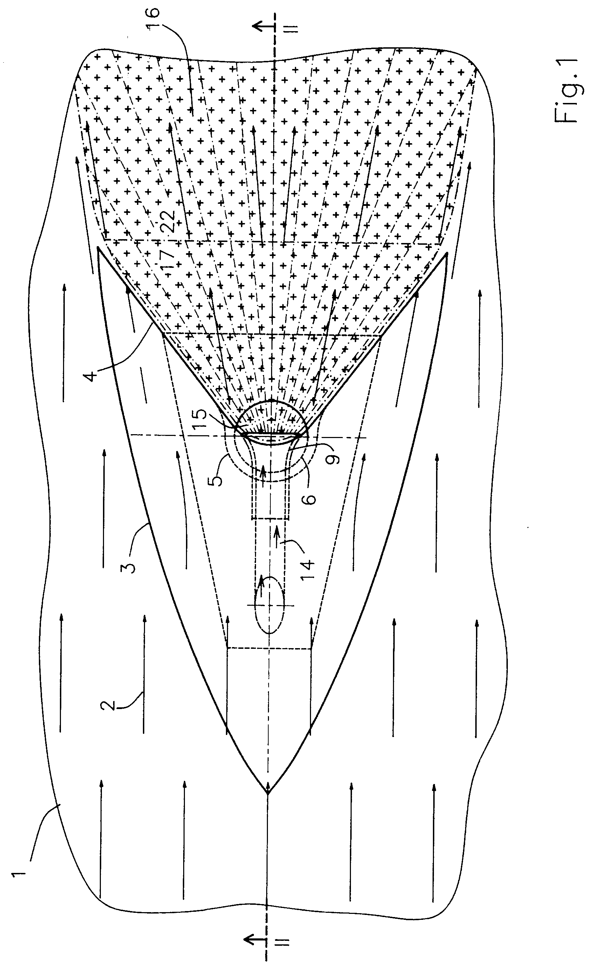

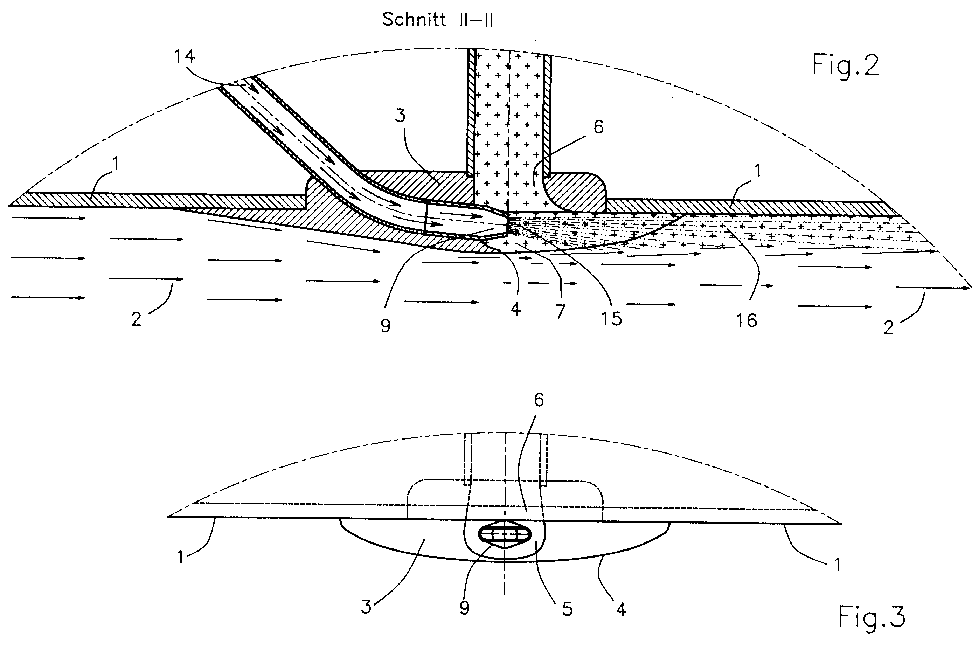

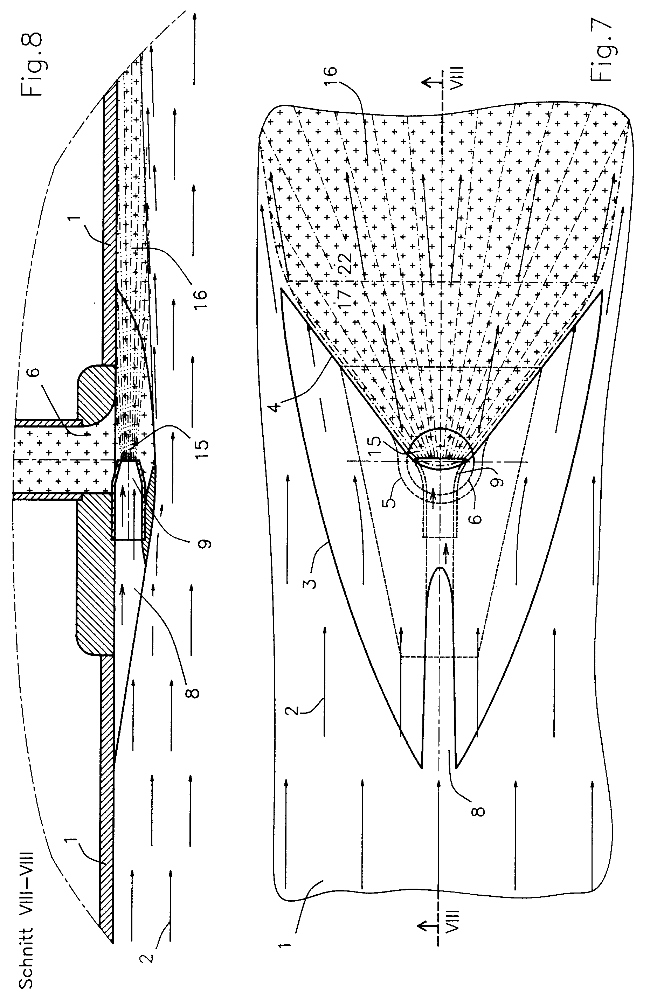

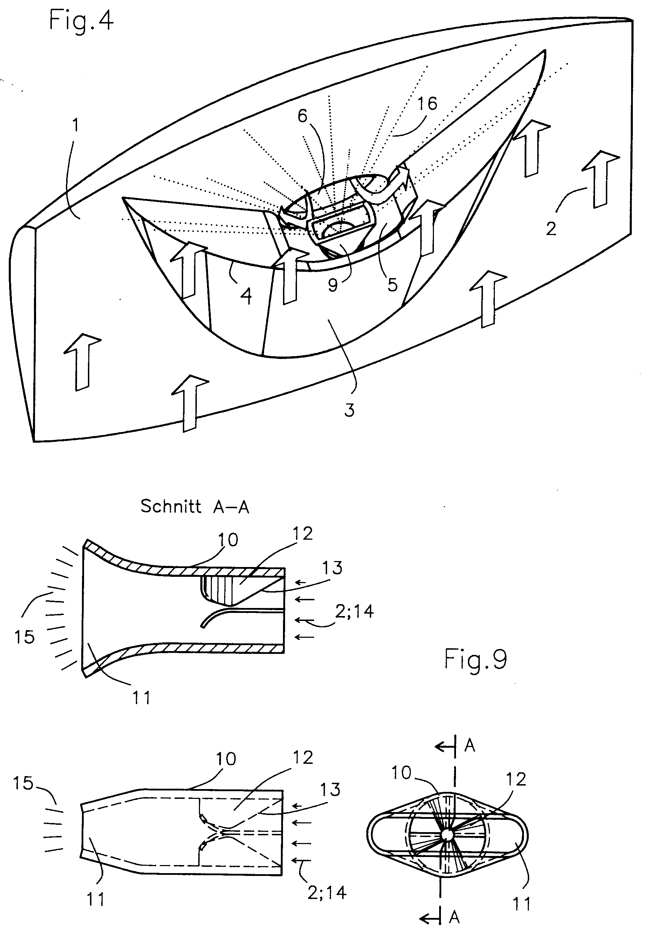

Wie in Fig.1 bis 6 dargestellt, besitzt die Vorrichtung 3 eine keilartige, stromlinienförmige, einem liegenden V nicht unähnliche Form, die von der Spitze zu den Schenkeln ansteigt und mit einer ebenfalls V- förmigen Abrißkante 4 endet. Aus Fig.5 ersieht man die Anordnung der Vorrichtungen 3, unterhalb des Gleitbodens 1, als keilartige, stromlinienförmige Erhebung auf dem Gleitboden 1, mit der Spitze in Fahrtrichtung zeigend. Steigt nun die Geschwindigkeit an, so wird infolge der Keilform das anströmende Wasser 2, vom Gleitboden 1, abgehoben. Es entsteht, entsprechend dem aus Fig. 3 ersichtlichen Abrißkantenprofil 4 der Vorrichtung 3, ein fast wasserfreier Raum 7. Die Begrenzung des wasserfreien Raumes 7, erfolgt zum einen durch den Gleitboden 1, in Fahrtrichtung durch die Abrißkante 4 der Vorrichtung 3, und durch das über der Abrißkante 4 anströmende Wasser 2. Im Scheitelpunkt der V-förmigen Abrißkante 4, befindet sich in einer Aushöhlung 5, die in Fig. 9 dargestellte Düse 9. Der Düseneinlauf ist mit Leitschaufeln 12 versehen, die dem zugeleiteten Druckwasser 14 einen Drehimpuls aufprägen, der das durchströmende Druckwasser 14 in eine schraubenförmige Rotationsbewegung versetzt. Diese zusätzliche Rotationsbewegung des Druckwassers 14 hat zur Folge, daß sich das aus der Düse 9 austretende Strahlwasser 15 in viele energiereiche Einzelstrahlen, bzw. Wassertropfen, aufteilt. In die entstehenden Zwischenräume wird Luft gesaugt, die durch Luftleitungsöffnungen 6 im Gleitboden 1 in den Mündungsbereich der Düse 9 gelangt. Durch entsprechende Gestaltung der Vorrichtung 3 und der Luftzuführung im Mündungsbereich der Düse 9 mit der Aushöhlung 5 wird, wie aus Fig.1 ersichtlich, ein freier und strömungsgünstiger Mischraum 17 zur Bildung des Luft-Wasser-Gemisches 16 geschaffen. Durch die spezielle elliptische Form der Düsenmündung 11, wird ein fächerförmiges, dem Profil der Abrißkante 4 angepaßtes Strahlbild erreicht. Die kinetische Energie des Strahlwassers 15 treibt das im Mischraum 17 entstandene Luft-Wasser-Gemisch 16 in den Fangraum 22 hinter der Vorrichtung 3 und verhindert dadurch, daß das anstromende Wasser 2 sich wieder an den Gleitboden anlegt.

Durch die Formgebung der Vorrichtung 3 in Abstimmung mit der Düse 9 kann die Ausbreitung des Luft-Wasser-Gemisches 16, sowie dessen Schichtdicke und Druck beeinflußt werden. Des Weiteren wird, wie aus Fig.6 ersichtlich, durch entsprechende Anzahl und Anordnung der Vorrichtung 3, der gesamte Gleitboden 1 oder ein großer Teil desselben mit dem Luft-Wasser-Gemisch 16 beaufschlagt, was eine wesentliche Reduzierung der Wasserreibung bewirkt.

Fig.7 und Fig.8 zeigt eine modifizierte Vorrichtung gemäß Fig.1 bis 3. Das für die Erzeugung des Luft-Wasser-Gemisches 16 erforderliche energiereiche Strahlwasser 15 wird indirekt, durch Ausnutzung der Geschwindigkeit des Wasserfahrzeuges und des daraus resultierenden dyn. Druckes des anströmenden Wassers 2, erzeugt. Hierzu ist in der Längsachse der Vorrichtung 3 ein leicht konischer, sich verjüngender Wasserzulauf 8 vorhanden, an dessen Ende sich die Düse 9 befindet. Ein Teil des anströmenden Wassers 2 wird entsprechend seinem Querschnitt erfaßt und der Düse 9 zugeleitet. Der Antrieb des Wasserfahrzeuges kann mittels eines herkömmlichen Schiffsantriebes, aber auch durch Ausnutzung der Windkraft, z.B. mittels Segel, erfolgen.

Fig.9 zeigt die Düse 9 in drei Ansichten. Der Düseneinlauf ist mit einer Drallbeschaufelung 12 ausgerüstet, die zusätzlich zur Axialbewegung des anströmenden Wassers 2 eine Radialbewegung erzeugt. Die Schaufelform ist so ausgelegt, daß geringstmögliche Widerstände und Verluste auftreten. Es sind vorzugsweise vier Leitschaufeln 12 vorgesehen, wobei auch eine kleinere oder größere Anzahl möglich ist. Die Befestigung der Leitschaufeln 12 erfolgt am Düsenmantel 10, und die Schaufeltiefe ist kleiner als der Radius der Düse 9, so daß ein Zentrumsstrahl unbeeinflußt erhalten bleibt. Zur Vermeidung von Verstopfungen ist die Anströmkante 13 der Schaufeln angeschärft. Zusätzlich ist diese Schnittkante in Längsrichtung abgeschrägt, so daß einströmende Fremdkörper vom Umfang ins Zentrum geleitet werden. Die Oberflächen der Leitschaufeln 12 und der Düse 9 sind mit einer sehr geringen Rauheit versehen, so daß ein sehr guter Düsenwirkungsgrad erreicht wird. Je nach Ausführung und Form der Leitschaufeln 12 wird ein mehr oder weniger starkes Aufplatzen des aus der Düse 9 austretenden Strahlwassers 15 in viele Einzelstrahlen, bzw. Wassertropfen bewirkt. In die so entstehenden Freiräume wird Luft gesaugt. Die Düsenmündung 11 weist im wesentlichen die Form einer flachen Ellipse auf, wodurch das austretende und aufplatzende Strahlwasser 15 ein ebenfalls flaches, sich fächerförmig erweiterndes Profil erhält, das dem Profil der Abrißkante 4 der Vorrichtung 3 angepaßt ist.

Eine weitere vorteilhafte Ausführung der Vorrichtung nach Fig.8 besteht darin, daß zur Erzeugung des mit einem Drall versehenen Strahlwassers 15 im Wasserzulauf 8 zur Düse 9 ein Antriebspropeller vorgesehen wird, wobei der Propeller gleichzeitig die Schubkraft für die Fortbewegung des Wasserfahrzeuges liefern kann. Der Drall des Strahlwassers 15 wird durch die Rotation des Propellers hervorgerufen

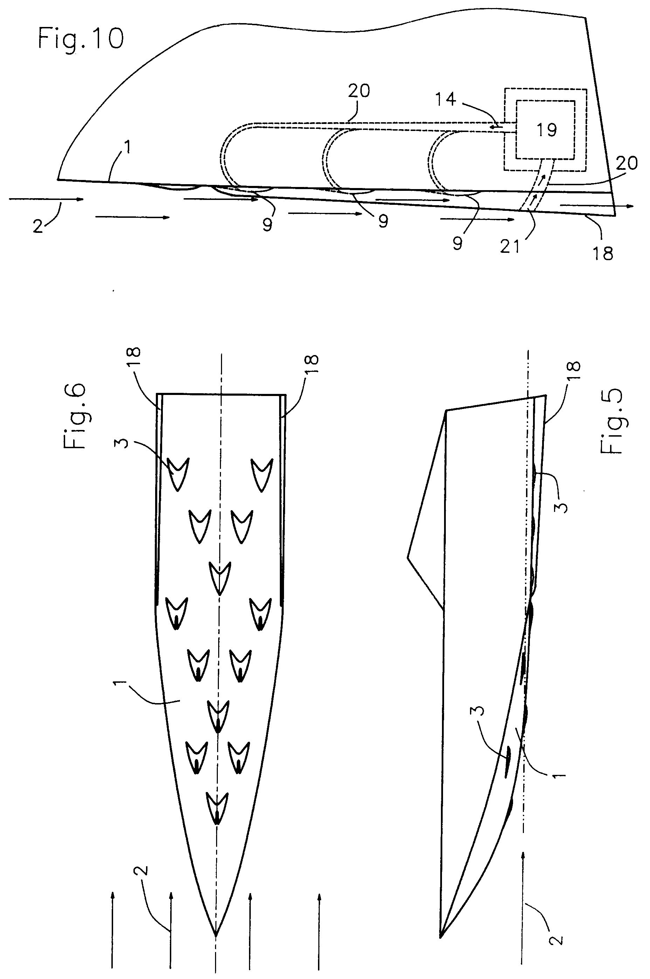

Fig. 10 zeigt eine unterhalb des Gleitbodens 1 angebrachte, in das anströmende Wasser 2 ragende und mit Eintrittsöffnungen 21 für die Wasserversorgung des Strahlantriebes 19 versehene Führungsleiste 18. Durch Rohrleitungen 20 wird das Wasser zunächst der Pumpe / Turbine 19 und anschließend der Düse 9 zugeführt. Die Führungsleiste 18 kann gleichzeitig die Funktion eines Kieles oder Schwertes übernehmen.

### Bezugszeichenliste

- 1: Gleitboden
- 2: Anströmendes Wasser
- 3: Vorrichtung
- 4: Abrißkante
- 5: Aushöhlung
- 6: Luftleitungsöffnung
- 7: Wasserfreier Raum
- 8: Wasserzulauf
- 9: Düse
- 10: Düsenmantel
- 11: Düsenmündung
- 12: Leitschaufeln
- 13: Anströmkante
- 14: Druckwasser
- 15: Strahlwasser
- 16: Luft-Wasser-Gemisch
- 17: Mischraum
- 18: Führungsleiste
- 19: Pumpe / Turbine
- 20: Rohrleitung
- 21: Eintrittsöffnungen
- 22: Fangraum

## Patentansprüche

1. Verfahren zur wirkungsvolleren Umsetzung der Antriebsenergien von Wasserfahrzeugen in Geschwindigkeit, dadurch gekennzeichnet, daß durch mindestens eine in oder an einem Gleitboden (1) angeordnete Düse (9), Strahlwasser (15) austritt, dessen Energie in oder vor einen Mündungsbereich der Düse (9) durch mindestens eine Luftleitungsöffnung (6) im Gleitboden (1) zugeführte Luft nach dem Venturi-Prinzip ansaugt und in einem Mischraum (17) ein Luft-Wasser-Gemisch (16) erzeugt, das zwischen den Gleitboden (1) und anströmendes Wasser (2) geleitet wird, so daß sich zwischen diesen eine reibungsmindernde Gleitschicht bildet.

2. Verfahren nach Anspruch 1, dadurch gekennzeichnet, daß das Strahlwasser (15) mindestens einen Teil der Schubkraft für die Fortbewegung des Wasserfahrzeuges liefert.

3. Verfahren nach Anspruch 1, dadurch gekennzeichnet, daß das Strahlwasser (15) durch die Gleitgeschwindigkeit des Wasserfahrzeuges und den dadurch entstehenden dynamischen Druck des anströmenden Wassers (2) erzeugt wird.

4. Verfahren nach Anspruch 1, dadurch gekennzeichnet, daß dem Strahlwasser (15) ein Drall verliehen wird.

5. Vorrichtung zur wirkungsvolleren Umsetzung der Antriebsenergie von Wasserfahrzeugen in Geschwindigkeit, gekennzeichnet durch mindestens eine in oder an einem Gleitboden (1) des Wasserfahrzeugs angeordnete Düse (9) für einen Austritt von Strahlwasser (15), mindestens eine in oder vor einem Mündungsbereich der Düse (9) angeordnete Luftleitungsöffnung (6) für zugeführte, durch die Energie des Strahlwassers nach dem Venturi-Prinzip angesaugte Luft, sowie mindestens einen hinter der Luftleitungsöffnung (6) angeordneten Mischraum (17) zur Erzeugung eines Luft-Wasser-Gemischs (16), das zwischen den Gleitboden (1) und mindestens einen Teil des anströmenden Wassers (2) geleitet wird, so daß sich zwischen diesen eine reibungsmindernde Gleitschicht bildet.

6. Vorrichtung nach Anspruch 5, gekennzeichnet durch eine Abrißkante (4) zum Abheben des anstömenden Wassers vom Gleitboden.

7. Vorrichtung nach Anspruch 6, dadurch gekennzeichnet, daß die Düse (9) so im Bereich der Abrißkante (4) angeordnet ist, daß sie mit Hilfe der Energie des austretenden Strahlwassers (15) die der Luftleitungsöffnung (6) zugeführte Luft ansaugt und das beim Durchmischen mit dem Strahlwasser (15) entstehende Luft-Wasser-Gemisch hinter der Abrißkante (4) zwischen den Gleitboden (1) und das anströmende Wasser (2) gelangt.

8. Vorrichtung nach einem der Ansprüche 5 bis 7, dadurch gekennzeichnet, daß der Mischraum (17) eine flache, nach hinten divergierende Form aufweist.

9. Vorrichtung nach einem der Ansprüche 5 bis 8, dadurch gekennzeichnet, daß vor oder im Bereich der Düse (9) Einrichtungen (12) vorgesehen sind, die zusätzlich zur Axialbewegung eine Radialbewegung des Strahlwassers (15) erzeugen.

10. Vorrichtung nach Anspruch 9 oder 10, gekennzeichnet durch einen Wasserzulauf (8), durch den ein Teil des anströmenden Wassers (2) infolge der Relativbewegung zwischen Gleitboden (1) und anströmendem Wasser (2) zur Düse (9) strömt.

11. Vorrichtung nach einem der Ansprüche 5 bis 9, gekennzeichnet durch einen in einem Wasserzulauf (20) zur Düse angeordneten Schubantrieb (19).
